Europäisches Patentamt

European Patent Office

Office européen des brevets

(11) Veröffentlichungsnummer: **0 387 543**
**A2**

## (12) EUROPÄISCHE PATENTANMELDUNG

(21) Anmeldenummer: **90103069.2**

(22) Anmeldetag: **16.02.90**

(51) Int. Cl.5: **H04J 3/16**

(30) Priorität: **13.03.89 DE 3908134**

(43) Veröffentlichungstag der Anmeldung:
**19.09.90 Patentblatt 90/38**

(84) Benannte Vertragsstaaten:
**AT BE CH DE DK ES FR GB GR IT LI NL SE**

(71) Anmelder: **Siemens Aktiengesellschaft**
**Wittelsbacherplatz 2**
**D-8000 München 2(DE)**

(72) Erfinder: **Müller, Horst, Dipl.-Ing.**
**Dammstrasse 11**
**D-8021 Hohenschäftlarn(DE)**

(54) **Synchrones Transport-Modul STM-O.**

(57) Zwischen der europäischen plesiochronen Digitalsignalhierarchie und der Synchron-Digital-Multiplexhierarchie fehlt ein genormtes Bindeglied, über mehrere von denen vier 34,368-Mbit/s-Signale in ein synchrones Transport-Modul STM-1 eingefügt werden können.

Es wird ein synchrones Transport-Modul STM-0 mit 135 Spalten (Sp) und neun Zeilen (Z) für eine (Folgefrequenz von 4 kHz und eine Übertragungskapazität von 38,88 Mbit/s vorgeschlagen, das neben einem Kopfteil (SOH, DZA) mit drei Spalten und zwei weiteren Spalten (SG) für betriebsinterne Signale zwei Nutzinformationsblocks (AU-31/1, AU-31/2) mit jeweils 65 Spalten aufweist. Neben einem genormten und einem bereits vorgeschlagenen virtuellen Container wird ein weiterer für die Einfügung in diese Nutzinformationsblocks (AU-31/1, AU-31/2) geeigneter angegeben, der von dort aus in einfacher Weise in ein genormtes synchrones Transport-Modul STM-1 der nächsthöheren Hierarchiestufe übertragen werden kann. Weiter werden Vorschläge für die Plazierung der Datenzeiger gemacht. Das synchrone Transport-Modul STM-0 empfiehlt sich als unterste Stufe der Synchron-Digital-Multiplexhierarchie.

## FIG 1

EP 0 387 543 A2

Die Erfindung bezieht sich auf ein synchrones Transport-Modul STM-0 mit neun Zeilen, mit einem aus einer ersten Spaltengruppe mit drei Spalten bestehenden Kopfteil, der in den drei ersten und fünf letzten Zeilen einen Abschnittskopf (Section Overhead) und in der vierten Zeile einen Datenzeigerabschnitt enthält, und mit einem aus einer zeiten Spaltengruppe (Administrative Unit) mit fünfundsechzig Spalten bestehenden Nutzinformationsblock zur Aufname eines ersten virtuellen Containers insgesamt zur Aufnahme je eines Bytes (Oktetts) pro Spalte und Zeile.

Ein solches synchrones Transport-Modul für eine Übertragungskapazität von 39 168 kbit/s ist Gegenstand eines älteren Vorschlags (89100804.7).

Die wichtigsten Digitalsignalhierarchien sind in der Zeitschrift "telcom report", 11 (1988), Heft 5, Seiten 160 bis 163, erste Figur beschrieben. Die Synchron-Digital-Multiplexhierar chie (SDH) nach den CCITT-Empfehlungen G.707, G.708 und G.709 umfaßt Transport-Moduln STM-1 für 155,52 Mbit/s, STM-4 für 622,08 Mbit/s und STM-16 für 2488,32 Mbit/s. Die europäische Hierarchie für plesiochrone Digitalsignale arbeitet mit Bitraten von 2,048 Mbit/s, 8,448 Mbit/s, 34,368 Mbit/s sowie 139,264 Mbit/s und die nordamerikanische Hierarchie für plesiochrone Digitalsignale verwendet Bitraten von 1,544 Mbit/s, 6,312 Mbit/s und 44,736 Mbit/s.

Die Zeitschrift "ntz", 41 (1988) Heft 10, Seiten 570 - 574 zeigt in Bild 3 ein synchrones Transport-Modul STM-1, in Bild 7 einen Abschnittskopf sowie AU-Datenzeiger (Administrativ Unit Pointers) und in Bild 8 Pfadrahmenköpfe (Path Overheads) für verschiedene virtuelle Container. Der Pfadrahenkopf VC-31 POH umfaßt sechs Bytes. weitere drei Bytes wie bei den Pfadrahmenköpfen VC-32 POH und VC-4 POH sind nicht vorhanden. Das synchrone Transport-Modul STM-1 weist bei neun Zeilen einen Kopf teil mit neun Spalten und einen Nutzinformationsblock AU-4 bzw. vier Nutzinformationsblökke AU-31 mit 261 Spalten auf. Der Rahmen enthält somit 2430 byte. Im Nutzinformationsblock AU-4 sollen aus der europäischen Hierarchie vorzugsweise H4-Signale einer Bitrate von 139,264 Mbit/s oder H21-Signale einer Bitrate von 34,368 Mbit/s oder H12-Signale einer Bitrate von 2,048 Mbit/s übertragen werden. In einem Nutzinformationsblock AU-31 sollen vorzugsweise H21-Signale einer Bitrate von 34,368 Mbit/s oder H12-Signale einer Bitrate von 2,048 Mbit/s übertragen werden.

Nach der US-Norm (ANSI) ist für ein Synchrones Optisches Netzwerk SONET weiter als Basis-Block ein synchrones Transport-Signal STS-1 vorgesehen, das einen Abschnittskopf von 9 byte, einen Leitungskopf (Line Overhead) von 15 byte, einen Nutzinformationsblock AU-32 und einen Datenzeiger (pointer) AU-32 PTR in derselben Struktur wie der des Transport-Moduls STM-1 aufweist. Das synchrone Transportsignal STS-1 besitzt eine Übertragungskapazität von 51,84 Mbit/s, was exakt ein Drittel der Übertragungskapazität des synchronen Transport-Moduls STM-1 ist, und vermag ein H22-Signal einer Bitrate von 44,736 Mbit/s aufzunehmen.

Eine byteweise Verschachtelung von drei synchronen Transport-Signalen STS-1 ergibt ein synchrones Transport-Signal STS-3, dessen Abschnittskopf dem des synchronen Transport-Moduls STM-1 entspricht. Damit ist das synchrone Transport-Signal STS-1 als Übertragungssystem auch nach CCITT abgedeckt.

In de Report CEPT TM-3: TD 59, Padua, 17. - 21.10.88 wird ohne Angabe einer Rahmenstruktur für ein Transport-Modul STM-0 eine Übertragungskapazität von 38 880 kbit/s vorgeschlagen. Diese bietet in einem synchronen Netz den Vorteil einer einfacheren und stabileren Taktsynchronisation, als dies bei einem ungünstigeren Teilungsverhaltnis der Fall wäre.

Aufgabe der Erfindung ist es, ein synchrones Transport-Modul STM-0 für diese Übertragungskapazität anzugeben, das wenigstens ein H21-Signal einer Bitrate von 34,368 Mbit/s aufzunehmen vermag.

Ausgehend von dem synchronen Transport-Modul der einleitend geschilderten Art wird diese Aufgabe erfindungsgemäß mit den Merkmalen des Anspruchs 1 gelost. Drei Typen zur Aufnahme geeigneter virtueller Container sind den Ansprüchen 2, 3 und 4 zu entnehmen. Die Ansprüche 5 und 6 betreffen die Übernahme der Bytes aus den Nutzinformationsblocks zweier synchroner Transport-Module STM-0 in ein synchrones Transportmodul STM-1.

Anhand von Ausführungsbeispielen wird die Erfindung näher erläutert:

Fig.1 zeigt das erfindungsgemäße synchrone Transport-Modul STM-0,

Fig.2 zeigt das erfindungsgemaße synchrone Transport-Modul STM-0, vorbereitet für eine Aufnahme von zwei virtuellen Containern VC-31 des ersten Typs,

Fig.3 zeigt ein synchrones Transport-Modul STM-1, vorbereitet für eine Aufnahme von vier virtuellen Containern VC-31 des ersten Typs,

Fig.4 zeigt eine Verschachtelung von vier virtuellen Containern VC-31 in den vier Nutzinformationsblöcken 4 x AU-31 des synchronen Transport-Moduls STM-1,

Fig.5 zeigt das erfindungsgemaße synchrone Transport-Modul STM-0, vorbereitet für die Aufnahme zweier virtueller Container VC-31a des zweiten Typs,

Fig.6 zeigt das erfindungsgemäße synchrone Transport-Modul STM-0, vorbereitet für die Aufnahme zweier virtueller Container VC-31b des dritten Typs,

Fig.7 zeigt ein synchrones Transport-Modul STM-1, vorbereitet für eine Aufnahme von vier virtuellen Containern VC-31a des zweiten Typs oder VC-31b des dritten Typs,

Fig.8 zeigt den Abschnittskopf des synchronen Transport-Moduls STM-1,

Fig.9 zeigt eine Verschachtelung von vier virtuellen Containern VC-31a des zweiten Typs oder VC-31b des dritten Typs in den vier Nutzinformationsblöcken 4 x AU-31* des synchronen Transport-Moduls STM-1 und

Fig.10 bis 12 zeigen Multiplexstrukturen im betroffenen Bereich der Synchron-Digital-Multiplexhierarchie.

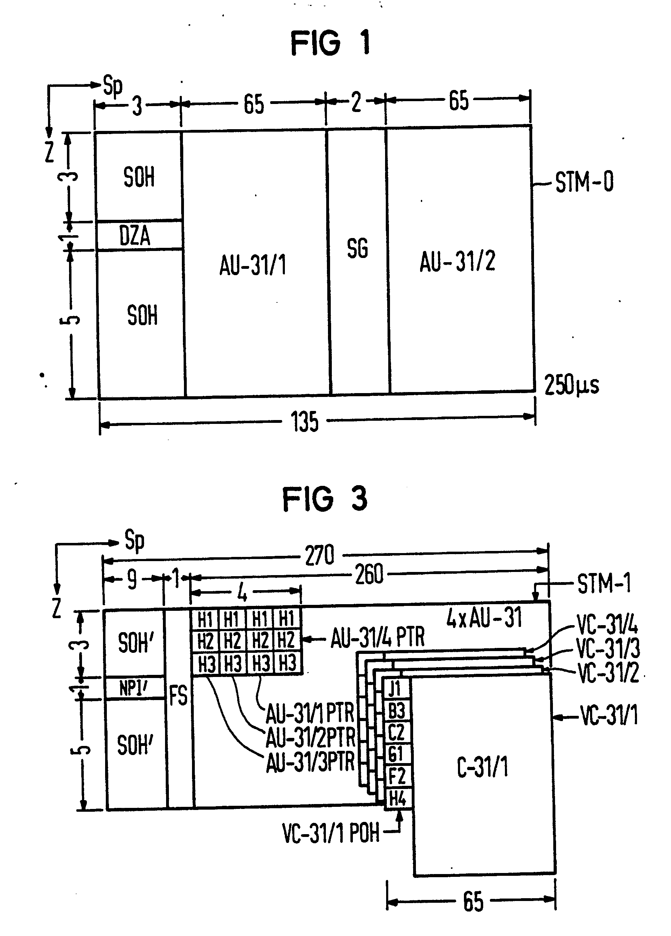

Fig.1 zeigt das erfindungsgemäße synchrone Transport-Modul STM-0. Dieses ist ein Pulsrahmen mit 1215 Zeitschlitzen, die jeweils 1 byte aufnehmen können. Zur übersichtlicheren Darstellung ist der Pulsrahmen in neun Abschnitte mit jeweils 135 Zeitschlitzen aufgeteilt, die untereinander angeordnet sind. Es ist dadurch ein Feld mit 135 Spalten Sp und neun Zeilen Z entstanden. Dieses ist in vier Spaltengruppen aufgeteilt. In der ersten, drei Spalten breiten Spaltengruppe ist ein zweiteiliger Abschnittskopf SOH und ein Datenzeigerabschnitt DZA untergebracht. Die zweite, fünfundsechzig Spalten breite Spaltengruppe AU-31/1 dient der Aufnahme eines ersten virtuellen Containers, die dritte, zwei Spalten breite Spaltengruppe SG dient der Übertragung betriebsinterner Signale und die vierte fünfundsechzig Spalten breite Spaltengruppe AU-31/2 dient der Aufnahme eines zweiten virtuellen Containers. Dieses synchrone Transport-Modul STM-0 wird bei einer Fogelefrequenz von 4 kHz während 250 μs übertragen.

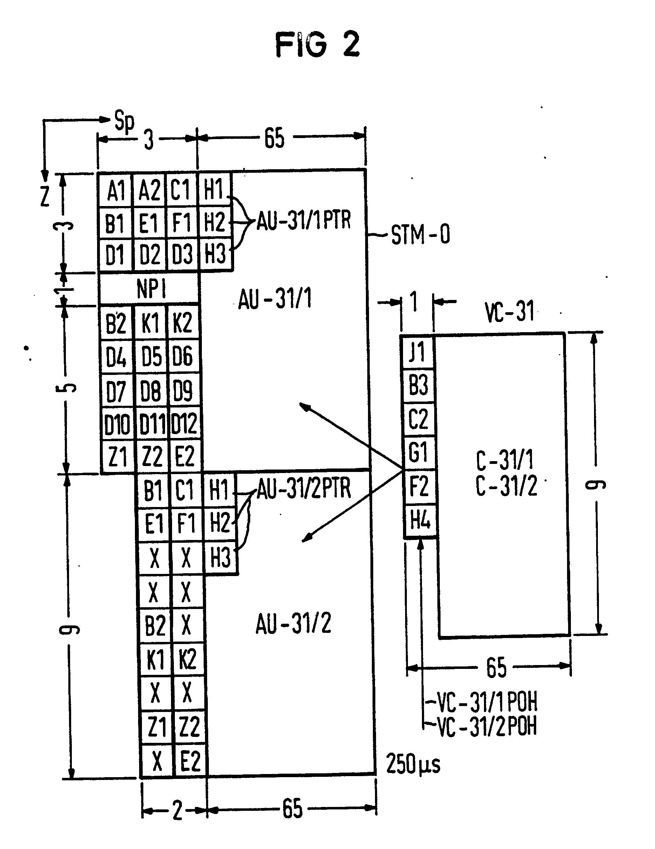

Fig.2 zeigt ein Transport-Modul STM-0 nach Fig.1 lediglich in einer anderen zeichnerischen Darstellung. Die dritte Spaltengruppe SG und die vierte Spaltengruppe AU-31/2 sind nämlich unter der ersten und zweiten angeordnet. Den Bytes im Abschnittskopf SOH und in der dritten Spaltengruppe SG sind nach CCITT bestimmten Aufgaben zugeordnet, soweit diese mit einer Buchstaben-Ziffernkombination versehen sind. Wenn sie dagegen mit einem X bezeichnet sind, so ist noch keine Verwendung festgelegt. Die Bytes H1, H2 und H3 in der zweiten Spaltengruppe AU-31/1 bilden einen Datenzeiger AU-31/1 PTR und die gleichen Bytes in der vierten Spaltengruppe AU-31/2 stellen einen Datenzeiger AU-31/2 PTR dar. Der Datenzeigerabschnitt DZA ist deswegen mit einer Anzeige NPI für fehlenden Datenzeiger versehen.

Rechts in Fig.2 ist ein virtueller Container VC-31 nach CCITT gezeigt, der einen Pfadrahmenkopf VC-31 POH und einen Container VC-31 enthält. Dieser virtuelle Container VC-31 besteht aus Spalten Sp und neun Zeilen Z. Die erste Spalte Sp mit dem Pfadrahmenkopf VC-31 POH umfaßt lediglich 6 byte. Je ein solcher virtueller Container VC-31 kann in die zweite Spaltengruppe AU-31/1 und in die vierte Spaltengruppe AU-31/2 eingefügt werden. Die Datenzeiger AU-31/1 PTR und AU-31/2 PTR zeigen die Lage der Anfänge, also der Bytes J1 der virtuellen Container VC-31 an.

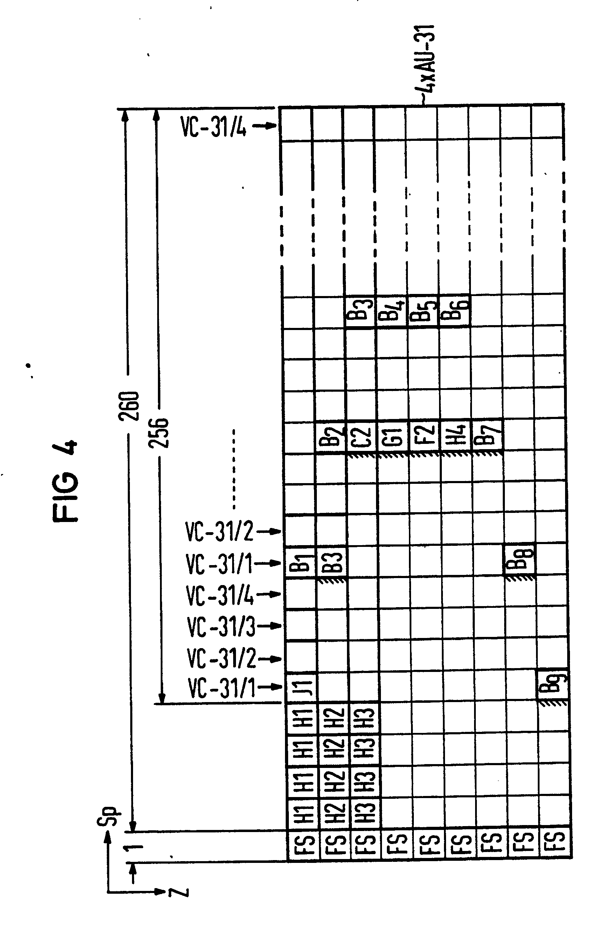

Fig. 3 zeigt ein synchrones Transport-Modul STM-1 nach CCITT mit 270 Spalten Sp und neun Zeilen Z Das Kopfteil mit einem Abschnittskopf SOH' und einer Anzeige NPI' für fehlenden Datenzeiger umfaßt neun Spalten. Eine Spaltengruppe 4 x AU-31 enthält 261 Spalten Sp, von denen die erste fest gestopft ist (FS). Von dieser sind vier Spalten mit den ersten drei Reihen für Datenzeiger AU-31/1 PTR, AU-31/2 PTR, AU-31/3 PTR und AU-31/4 PTR jeweils mit Bytes H1, H2 und H3 vorgesehen, die jeweils den Anfang eines von vier virtuellen Container VC-31/1, VC-31/2, VC-31/3, und VC-31/4 anzeigen, die in die restlichen Zeitschlitze eingefügt werden.

Fig. 4 zeigt die Spaltengruppe 4 x AU-31 nach Fig.3. Nach der ersten festgestopften Spalte FS sind links oben wie in Fig.3 die Bytes der Datenzeiger AU-31/1 PTR, AU-31/2 PTR, AU-31/3 PTR und AU-31/4 PTR zu sehen. In das restliche Feld werden die Bytes von vier virtuellen Container VC-31/1, VC-31/2, VG-31/3 und VC-31/4 spaltenweise, also byteweise verschachtelt, wobei der Beginn einer Byte-Reihe eines virtuellen Containers sich jeweils rechtsbündig an bereits besetzte Zeitschlitze anschließt. Dargestellt ist der Pfadrahmenkopf des virtuellen Containers VC-31/1 mit den Bytes J1, B3, C2, G1, F2 und H4 sowie die Bytes $B_1$ bis $B_9$ der ersten Spalte des Containers C-31/1.

Die Zuordnung der Bytes zu einzelnen Signalen mit konstantem Zeitabstand von Zeile zu Zeile ist hier nicht gewahrt, weil die Pfadrahmenkopfe VC-31/1 POH, VC-31/2 POH, VC-31/3 POH und VC-31/4 POH nicht in den gleichen Spalten wie die Datenzeiger AU-31/1 PTR, AU-31/2 PTR, AU-31/3 PTR und AU-31/4 PTR angeordnet sind. In den ersten drei Reihen fehlen die vier Spalten der Bytes H1, H2 und H3 für den virtuellen Container VC-31/1; in den letzten drei Reihen umfaßt dieser virtuelle Container VC-31/1 nur 64 Spalten.

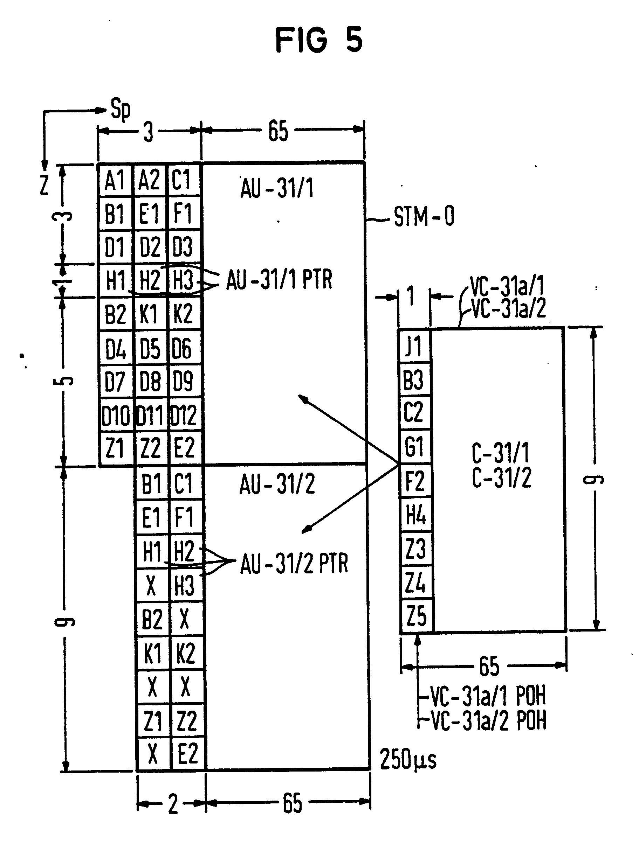

Fig.5 zeigt wieder, ein synchrones Transport-Modul STM-0. Dieses unterscheidet sich von dem nach Fig.2 dadurch, daß der Datenzeiger AU-31/1 PTR im Datenzeigerabschnitt DZA anstelle der Anzeige NPI für fehlenden Datenzeiger und der Datenzeiger AU-31/2 PTR in der dritten Spaltengruppe SG als Bytes H1, H2 und H3 untergebracht sind.

Der rechts dargestellte virtuelle Container VC-31a/1 bzw. VC-31a/2 unterscheidet sich von den in Fig.2 gezeigten durch den Pfadrahmenkopf VC-31a/1 POH bzw. VC-31a/2 POH mit zusätzlichen Bytes 23, 24 und 25.

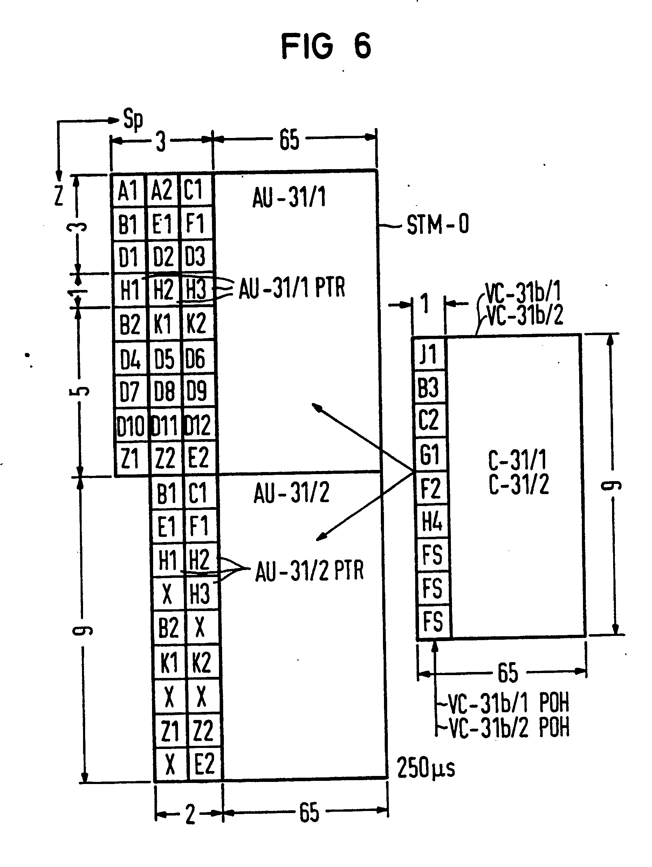

Fig.6 zeigt ein synchrones Transport-Modul STM-0, das dem in Fig.5 entspricht. Der rechts dargestellte virtuelle Container VC-31b/1 bzw. VC-31b/2 unterscheidet sich vom virtuellen Container VC-31a in Fig.5 lediglich dadurch, daß anstelle der Bytes Z3, Z4 und Z5 feste Stopfbytes FS vorgesehen sind.

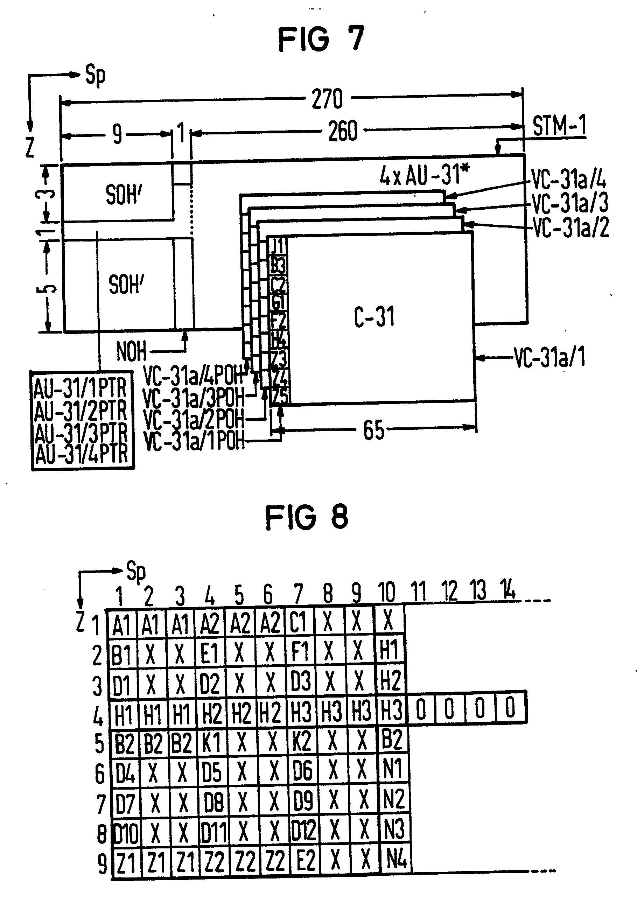

Fig.7 zeigt ein synchrones Transport-Modul STM-1, das sich von dem nach Fig.3 lediglich dadurch unterscheidet, daß die Datenzeiger AU-31/1 PTR, AU-31/2 PTR, AU-31/3 PTR, und AU-31/4 PTR jetzt im Bereich des Kopfteils und der ersten festgestopften Spalte der zweiten Spaltengruppe AU-4 untergebracht sind. In die restlichen 260 Spalten sollen vier virtuelle Container VC-31a/1, VC-31a/2, VC-31a/3, und VC-31a/4 wie dargestellt oder auch virtuelle Container VC-31b untergebracht werden.

Fig .8 zeigt die ersten 14 Spalten des synchronen Transport-Moduls STM-1 nach Fig.7. Die teilweise genormte Verwendung der Bytes des Abschnittskopfs SOH′ ist für die Erfindung ohne Interesse. In der vierten Zeile Z der ersten 6 Spalten Sp und in der zweiten und dritten Zeile Z der zehnten Spalte Sp sind die Bytes H1 und H2 der vier Datenzeiger AU-31/1 PTR, AU-31/2 PTR, AU-31/3 PTR und AU-31/4 PTR untergebracht. Die vierte Zeile Z der siebenten bis zehnten Spalte Sp mit vier auch zu den genannten Datenzeigern gehörenden Bytes H3 bieten eine negative Stopfmöglichkeit. Die vierte Zeile Z der elften bis vierzehnten Spalte Sp mit Bytes 0 ermöglicht positives Stopfen.

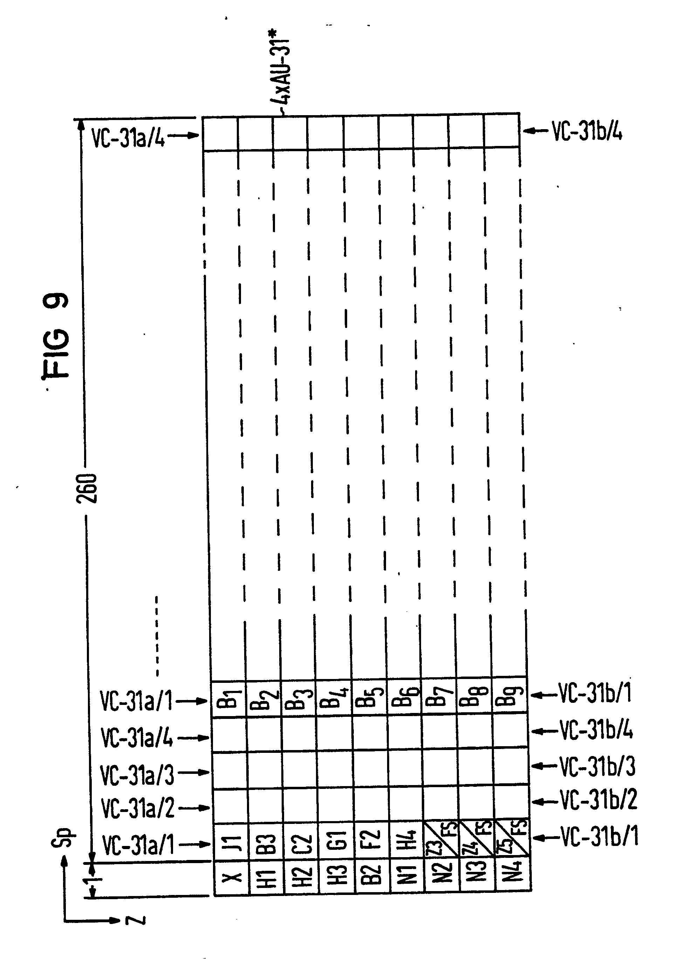

Fig. 9 zeigt die Spaltengruppe 4 x AU-31* des synchronen Transport-Moduls STM-1 nach Fig .7. In die zweite bis 261. Spalte Sp sind entweder virtuelle Container VC-31a/1, VC-31a/2, VC-31a/3 und VC-31a/4 oder virtuelle Container VC-31b/1, VG-31b/2, VC-31b/3 und VC-31b/4 byteweise verschachtelt. In der zweiten Spalte ist der Pfadrahmenkopf VC-31a/1 POH bzw. VC-31b/1 POH eingefügt. Im ersten Fall enthalten die Zeilen 7 bis 9 Bytes Z3, Z4 und Z5. Im anderen Fall feste Stopfbytes FS. In der sechsten Spalte folgt die erste Spalte des Containers C-31/1 entweder des virtuellen Containers VC-31a/1 oder des virtuellen Containers VC-31b/1. Die Bytes Z3, Z4 und Z5 können beispielsweise einen Netzwerk-Knotenkopf (Network Overhead) aufnehmen. Bei dieser Verschachtelung bleibt die Zuordnung der Bytes einer Containerspalte zu den Spalten in der spaltengruppe 4 x AU-31* erhalten.

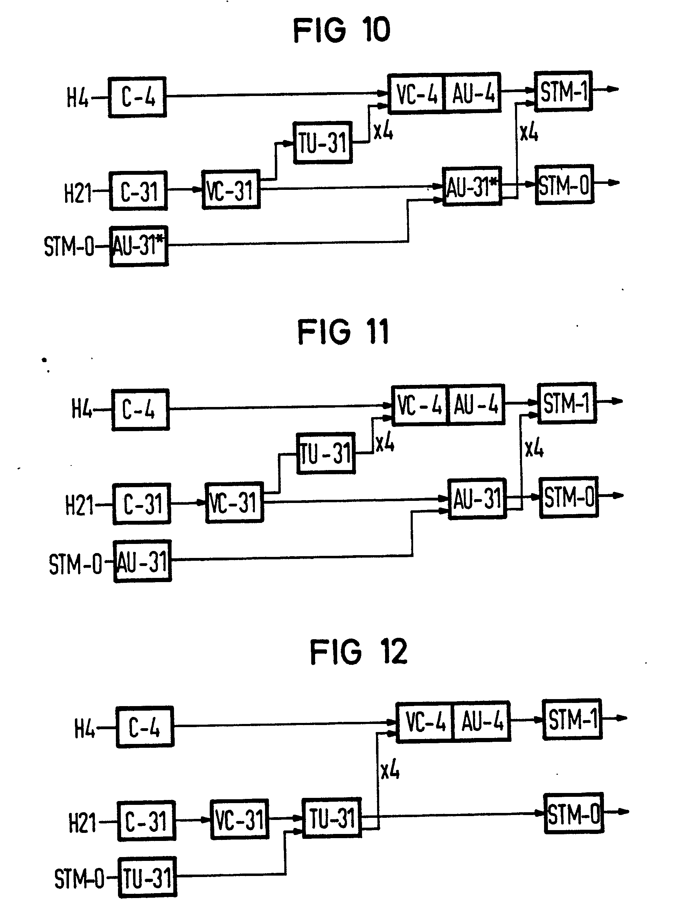

Die Fig.10 bis 12 zeigen die Multiplexstruktur im hier interessierenden Bereich der synchron-Digital-Multiplexhierarchie. Bisher noch nicht genannt wurde der Container C-4, der virtuelle Container VC-4 und der Nutzinformationsblock AU-4 für die Aufnahme eines H4-Signals einer Bitrate von 139,264 Mbit/s sowie die Nutzinforamtionsblöcke (tributary units) TU-31 im virtuellen Container VC-4.

Die Struktur in Fig.10 gilt für ein synchrones Transport-Mo dul STM-0 nach den Fig.2, 5 oder 7 mit den virtuellen Containern VC-31, VC-31a und VC-31b (älterer Vorschlag 89100804.7), die Struktur in Fig. 11 gilt für ein synchrones Transport-Modul STM-0 nach Fig.2 oder 6 mit virtuellen Containern VC-31 und VC-31b (CCITT-Empfehlung G.709, Fig.2.6) und die Struktur in Fig. 12 gibt ebenfalls für ein synchrones Transport-Modul STM-0 nach den Fig.2 oder 6 mit virtuellen Containern VC-31 und VC-31b (CCITT-Empfehlung G.709, Fig.2.2).

Wurde ein STM-0-Signal über einen virtuellen Container VC-31a aufgebaut, so muß das Einfügen eines oder bis zu maximal vier STM-0-Signalen in ein STM-1-Signal über ein AU-31*-Signal entsprechend den Fig. 7 und 8 erfolgen, da nur in diesem Fall die für die Obertragung der Bytes Z3, Z4 und Z5 erforderliche Zusatzkapazität im 4 x Au31*-Nutzinformationsblock zur Verfügung steht (siehe Fig.10).

Wurde ein STM-0-Signal aber über einen virtuellen Container VC-31 oder VC-31b aufgebaut, so kann das Einfügen eines oder bis zu maximal vier STM-0-Signalen in ein STM-1-Signal sowohl entsprechend den Fig. 7 und 8 über ein AU-31*-Signal als auch entsprechend der Fig.3 über ein AU-31-Signal erfolgen (siehe Fig.10 und 11). Erfolgt das Einfügen des virtuellen Containers VC-31b entsprechend den Fig. 7 und 8, so werden die drei festen Stopfbytes FS mit übertragen. Erfolgt das Einfügen aber entsprechend der Fig.3, so steht für diese drei festen Stopfbytes FS keine Übertragungskapazität im STM-1-Signal zur Verfügung, da im 4 x AU-31-Nutzinformationsblock die vier Datenzeiger AU-31/1 PTR, AU-31/2 PTR, AU-31/3 PTR und AU-31/4 PTR untergebracht sind. Beim Einfügen entsprechend der Fig. 3 werden daher die drei festen Stopfbytes FS weggelassen.

Wurde ein STM-0-Signal über einen virtuellen Container VC-31 oder VC-31b aufgebaut, so kann das Einfügen eines oder bis zu maximal vier STM-0-Signalen in ein STM-1-Signal über ein TU-31-Signal entsprechend Fig.2.2 der CCITT-Empfehlung G.709 erfolgen.

Für das Einfügen des virtuellen Containers VC-31b steht für die drei festen Stopfbytes FS keine Übertragungskapazität im STM-1-Signal zur Verfügung, da im 4 x TU-31-Nutzinformationsblock die vier Datenzeiger TU-31/1 PTR, TU-31/2 PTR, TU-31/3 PTR und TU-31/4 PTR untergebracht sind. Beim Einfügen entsprechend Fig.12 werden daher die drei festen Stopfbytes FS weggelassen.

**Ansprüche**

1. Synchrones Transport-Modul (STM-0) mit 9 Zeilen, mit einem aus einer ersten Spaltengruppe mit 3 Spalten bestehenden Kopfteil, der in den drei ersten und fünf letzten Zeilen einen Abschnittskopf (SOH) und in der vierten Zeile einen Datenzeigerabschnitt (DZA) enthält, und mit einem aus einer zweiten Spaltengruppe (AU-31/1) mit 65 Spalten bestehenden Nutzinformationsblock zur Aufnahme eines ersten virtuellen Containers (VC-31/1, VC-31a/1, VC-31b/1) insgesamt zur Aufnahme je eines Bytes (Oktetts) pro Spalte und Zeile,
**dadurch gekennzeichnet,**
daß eine dritte Spaltengruppe (SG) mit 2 Spalten vorgesehen ist,
die der Aufnahme zusätzlicher Bytes dient,
daß eine vierte Spaltengruppe (AU-31/2) mit 65 Spalten vorgesehen ist, die der Aufnahme eines virtuellen Containers (VC-31/2, VC-31a/2, VC-31b/2) dient, und
daß eine Übertragungskapazität von 38 880 kbit/s vorgesehen ist.

2. Synchrones Transport-Modul (STM-0) nach Anspruch 1,
**dadurch gekennzeichnet,**
daß virtuelle Container (VC-31/1, VC-31/2) eines ersten Typs nach CCITT vorgesehen sind, die eine erste Spalte mit 6 Zeilen für einen Pfadrahmenkopf (VC-31/1 POH, VC-31/2 POH) und weitere 64 Spalten mit 9 Zeilen für einen Container (C-31/1, C-31/2) enthalten,
daß 3 Zeilen der ersten Spalte der zweiten (AU-31/1) und vierten (AU-31/2) Spaltengruppe der Aufnahme von Datenzeigern (AU-31/1 PTR, AU-31/2 PTR) der virtuellen Container (VC 31/1, VC-31/2) dienen und
daß der Datenzeigerabschnitt (DZA) der Aufnahme einer Anzeige (NPI) für fehlenden Datenzeiger dient.

3. Synchrones Transport-Modul (STM-0) nach Anspruch 1,
**dadurch gekennzeichnet,**
daß virtuelle Container (VC-31a/1, VC-31a/2) eines zweiten Typs vorgesehen sind, die eine erste Spalte für einen Pfadrahmenkopf (VC-31/1 POH, VC-31/2 POH) mit 9 Zeilen, mit Zusatzbytes (Z3, Z4, Z5) in der 7. bis 9. Zeile und weitere 64 Spalten mit 9 Zeilen für einen Container (C-31/1, C-31/2) enthalten,
daß der Datenzeigerabschnitt (DZA) der Aufnahme eines Datenzeigers (AU-31/1 PTR) des ersten virtuellen Containers (VC-31a/1) des zweiten Typs und
daß die dritte Spaltengruppe (SG) der Aufnahme eines Datenzeigers (AU-31/2 PTR) des zweiten virtuellen Containers (VG-31a/2) des zeiten Typs dient.

4. Synchrones Transport-Modul (STM-0) nach Anspruch 1,
**dadurch gekennzeichnet,**
daß virtuelle Container (VC-31b/1, VC-31b/2) eines dritten Typs vorgesehen sind, die eine erste Spalte für einen Pfadrahmenkopf (VC-31b/1 POH, VC-31b/2 POH) mit 9 Zeilen, mit festen Stopfbytes (FS) in der 7. bis 9. Zeile und weitere 64 Spalten mit 9 Zeilen für einen Container (C-31/1, C-31/2) enthalten,
daß der Datenzeigerabschnitt (DZA) der Aufnahme eines Datenzeigers (AU-31/1 PTR) des ersten virtuellen Containers (VC-31b/1) des dritten Typs und
daß die dritte Spaltengruppe (SG) der Aufnahme eines Datenzeigers (AU-31/2 PTR) des zweiten virtuellen Containers (VC-31b/2) des dritten Typs dient.

5. Synchrones Transport-Modul (STM-0) nach Anspruch 3,
**gekennzeichnet**
durch eine zweifache Anwendung
durch eine byteweise verschachtelte Einfügung von vier virtuellen Containern (VC-31a/1, VC-31a/2, VC-31a/3, VC-31a/4) des zweiten Typs in die 2. bis 261. Spalte des Nutzinformationsblocks (4 x AU-31*) eines synchronen Transport-Moduls (STM-1) der untersten Ebene der synchron-Digital-Multiplexhierarchie nach CCITT,
durch Einfügung der Datenzeiger (AU-31/1 PTR, AU-31/2 PTR, AU-31/3 PTR) von drei virtuellen Containern (VC-31a/1, VC-31a/2, VC-31a/3), des zweiten Typs in den dreifachen Datenzeigerabschnitt (DZA'),
durch Einfügung des Datenzeigers (AU-31/4 PTR) des vierten virtuellen Containers (VC-31a/4) des zweiten Typs in die erste Spalte der zweiten, dritten und vierten Zeile des Nutzinformationsblocks (4 x AU-31*),
durch Verwendung der siebenten bis neunten Spalte der vierten Zeile der ersten Spaltengruppe und der ersten Spalte der vierten Zeile des Nutzinformationsblocks (4 x AU-31*) für Negativ-Stopfen und durch Verwendung der zweiten bis fünften Spalte der vierten Zeile des Nutzinformationsblocks (4 x AU-31*) für Positiv-Stopfen.

6. Synchrones Transport-Modul (STM-0) nach Anspruch 4,
**gekennzeichnet**
durch eine zweifache Anwendung
durch eine byteweise verschachtelte Einfügung von virtuellen Containern (VC-31b/1, VC-31b/2, VC-31b/3, VC-31b/4) des dritten Typs unter Weglassung der Stopfbytes (FS) in die 2. bis 261. Spalte des Nutzinformationsblocks (4 x AU-31), eines synchronen Transport-Moduls (STM-1) der untersten Ebene der Synchron Digital-Multiplexhierarchie nach CCITT und
durch Einfügung der Datenzeiger (AU-31/1 PTR, AU-31/2 PTR, AU-31/3 PTR, AU-31/4 PTR) in die

EP 0 387 543 A2

ersten 3 Zeilen der 2. bis 5. Spalte dessen Nutzinformationsblocks (4 x AU-31).

7.Synchrones Transport-Modul (STM-0) nach einen der vorhergehenden Ansprüche,
**dadurch gekennzeichnet,**
daß mindestens eines der Zusatzbytes (Z3, Z4, Z5) oder anderer freier Bytes (X) der Aufnahme eines Netzwerk-Knotenkopfes (NOH) dient.

# FIG 1

# FIG 3

FIG 2

# FIG 4

EP 0 387 543 A2

# FIG 5

| | | |
|---|---|---|
| A1 | A2 | C1 |
| B1 | E1 | F1 |
| D1 | D2 | D3 |
| H1 | H2 | H3 |
| B2 | K1 | K2 |
| D4 | D5 | D6 |
| D7 | D8 | D9 |
| D10 | D11 | D12 |
| Z1 | Z2 | E2 |

AU–31/1

AU–31/1 PTR

| | |
|---|---|
| B1 | C1 |
| E1 | F1 |
| H1 | H2 |
| X | H3 |
| B2 | X |
| K1 | K2 |
| X | X |
| Z1 | Z2 |
| X | E2 |

AU–31/2

AU–31/2 PTR

STM–0

VC–31a/1
VC–31a/2

| |
|---|
| J1 |
| B3 |
| C2 |
| G1 |
| F2 |
| H4 |
| Z3 |
| Z4 |
| Z5 |

C–31/1
C–31/2

VC–31a/1 POH
VC–31a/2 POH

250µs

# FIG 6

# FIG 7

Sp →

Z ↓

270

9 · 1 · 260

STM-1

SOH'

4 x AU-31*

VC-31a/4
VC-31a/3
VC-31a/2

3
11
5

SOH'

C-31

VC-31a/1

NOH

AU-31/1PTR
AU-31/2PTR
AU-31/3PTR
AU-31/4PTR

VC-31a/4POH
VC-31a/3POH
VC-31a/2POH
VC-31a/1POH

65

# FIG 8

Sp →

Z ↓

| | 1 | 2 | 3 | 4 | 5 | 6 | 7 | 8 | 9 | 10 | 11 | 12 | 13 | 14 | ... |
|---|---|---|---|---|---|---|---|---|---|---|---|---|---|---|---|
| 1 | A1 | A1 | A1 | A2 | A2 | A2 | C1 | X | X | X | | | | | |
| 2 | B1 | X | X | E1 | X | X | F1 | X | X | H1 | | | | | |
| 3 | D1 | X | X | D2 | X | X | D3 | X | X | H2 | | | | | |
| 4 | H1 | H1 | H1 | H2 | H2 | H2 | H3 | H3 | H3 | H3 | 0 | 0 | 0 | 0 | |
| 5 | B2 | B2 | B2 | K1 | X | X | K2 | X | X | B2 | | | | | |
| 6 | D4 | X | X | D5 | X | X | D6 | X | X | N1 | | | | | |
| 7 | D7 | X | X | D8 | X | X | D9 | X | X | N2 | | | | | |
| 8 | D10 | X | X | D11 | X | X | D12 | X | X | N3 | | | | | |
| 9 | Z1 | Z1 | Z1 | Z2 | Z2 | Z2 | E2 | X | X | N4 | | | | | ... |

FIG 9

Sp

Z

260

VC-31a/1  VC-31a/2  VC-31a/3  VC-31a/4  VC-31a/1

VC-31a/4

| X | J1 | | | | B₁ | | | |
|---|----|---|---|---|----|---|---|---|
| H1 | B3 | | | | B₂ | | | |
| H2 | C2 | | | | B₃ | | | |
| H3 | G1 | | | | B₄ | | | |
| B2 | F2 | | | | B₅ | | | |
| N1 | H4 | | | | B₆ | | | |
| N2 | Z3/FS | | | | B₇ | | | |
| N3 | Z4/FS | | | | B₈ | | | |
| N4 | Z5/FS | | | | B₉ | | | |

VC-31b/1  VC-31b/2  VC-31b/3  VC-31b/4  VC-31b/1

VC-31b/4

4xAU-31*

EP 0 387 543 A2

# FIG 10

# FIG 11

# FIG 12